# EUROPÄISCHE PATENTANMELDUNG

(11) **EP 2 508 770 A1**
(43) Veröffentlichungstag der Anmeldung: **10.10.2012**
(21) Anmeldenummer: 12174072.4
(22) Anmeldetag: 28.04.2010
(51) Int. Cl.: F16D 3/223, F16D 3/84

(54) **Gelenkwelle**

(30) Priorität: 08.05.2009 DE 202009006696 U
(62) Teilanmeldung aus: 10719588.5
(71) Anmelder: BF New Technologies GmbH, 63165 Mühlheim (DE)
(72) Erfinder: Disser, Claus, 63500 Seligenstadt (DE)
(74) Vertreter: KEIL & SCHAAFHAUSEN Patentanwälte

(57) **Zusammenfassung**

Gelenkwelle für ein Kraftfahrzeug, insbesondere Seitenwelle, mit zwei Gleichlaufgelenken, die jeweils eine Innennabe (3), eine Außennabe (4), einen zwischen diesen angeordneten Käfig (5) mit Kugeln (6) und einen formschlüssig mit der Außennabe verbindbaren Armierungsring (7) aufweisen, wenigstens einem Wellenrohr (16) und ggf. einer Verschiebeeinheit (17, 18). (Fig. 1)

## Beschreibung

Die Erfindung betrifft eine Gelenkwelle, welche in Längs- oder Seitenwellen von Fahrzeugen einsetzbar ist. Diese kann Gleichlaufgelenke aufweist mit einer Innennabe, einer Außennabe und einem formschlüssig mit der Außennabe verbindbaren Armierungsring, der die Außennabe drehfest umgreift. Zusätzlich kann der Armierungsring einen Anschlagbereich aufweisen, der die Position der Außennabe in dem Armierungsring in einer ersten axialen Richtung definiert.

Eine als Seitenwelle ausgebildete Gelenkwelle mit zwei sogenannten UF-Gelenken ist beispielsweise aus der DE 102 20 715 A1 bekannt. Die beiden Gelenke dieser Seitenwelle unterscheiden sich, wobei beide Gelenke eine massive, glockenförmige Außennabe aufweisen, die einstückig mit einem Zapfen zum Anschluss des Gelenks ausgebildet ist. Aufgrund dieser Gestaltung der Gelenke ist die gesamte Seitenwelle vergleichsweise schwer. Weiter zeigt auch die DE 199 38 771 C2 eine Seitenwelle mit UF-Gelenken, die aufgrund ihres hohen Gewichts die ungefederte Masse in Fahrzeugen ungünstig beeinflussen.

Aus der DE 196 09 423 A1 ist eine Seitenwelle zum Einsatz bspw. an der Hinterachse eines Fahrzeugs bekannt. Die Gelenke dieser Seitenwelle sind im Betrieb für vergleichsweise kleine Beugungen ausgebildet. Für die Vorderachse ist eine solche Welle ungeeignet, da zum Lenken des Fahrzeugs größere Betriebsbeugewinkel der Gelenke erforderlich sind.

Grundsätzlich ist es derzeit üblich, sowohl in Längs- als auch in Seitenwellen von Fahrzeugen jeweils dem Einsatzzweck entsprechende Gelenke individuell vorzusehen. Bei einem allradgetriebenen Fahrzeug ist es daher zumeist so, dass nicht nur die Gelenke an der Längswelle untereinander verschieden sind, sondern dass diese auch von den in den Seitenwellen eingesetzten Gelenken verschieden sind. Auch untereinander sind die Seitenwellen für die Vorderachse und die Hinterachse nicht baugleich und die in einer Seitenwelle verwendeten Gelenke sind ebenfalls an die unterschiedlichen Anforderungen angepasst. Auf diese Weise ist es möglich, die für den jeweiligen Einsatzzweck optimalen Gelenke und Wellen einzusetzen, beispielsweise an der Vorderachse Seitenwellen mit großen Betriebsbeugewinkeln und an der Hinterachse Seitenwellen mit kleinen Betriebsbeugewinkeln. Zudem kann durch den Einsatz von Verschiebegelenken zumindest teilweise auf in die Wellenabschnitte integrierte Verschiebeeinheiten verzichtet werden.

Aufgabe der vorliegenden Erfindung ist es demgegenüber, eine Gelenkwelle bzw. einen Antriebsstrang für ein Kraftfahrzeug anzugeben, die hinsichtlich der Herstellungskosten und hinsichtlich der Gewichtsverteilung insbesondere unter Berücksichtigung der ungefederten Massen optimiert sind.

Bei einem Gleichlaufgelenk der eingangs genannten Art kann beispielsweise der Zapfen einen Schulterbereich, der ggf. flanschartig ausgebildet sein kann, mit einer axialen Anschlagfläche aufweisen, die die Position der Außennabe in dem Armierungsring in einer zweiten, der ersten axialen Richtung entgegengesetzten axialen Richtung definiert, wobei der Zapfen an dem Armierungsring fixiert ist. Mit anderen Worten umfasst der Armierungsring die Außennabe so, dass eine drehfeste und in einer axialen Richtung ortsfeste Aufnahme der Außennabe in dem Armierungsring erreicht wird. Die Außennabe kann also in dem Armierungsring lediglich von dem Anschlagbereich weggezogen und gegen diesen angelegt werden. Die Fixierung der Außennabe in dem Armierungsring erfolgt über den Schulterbereich des Zapfens, der gegen die Außennabe angelegt wird, wodurch diese gegen den Anschlag in dem Armierungsring gepresst wird. Nach Einsetzen der Außennabe und des Schulterbereichs des Zapfens in den Armierungsring ist die Außennabe somit in dem Armierungsring fixiert. Um ein Lösen des Schulterbereichs des Zapfens aus dem Armierungsring zu verhindern, kann der Schulterbereich des Zapfens mit dem Armierungsring verschweißt oder in anderer geeigneter Weise, insbesondere stoffschlüssig, verbunden sein.

Die Herstellung eines solchen Gelenks kann folglich erfindungsgemäß durch die Bereitstellung eines Armierungsrings erfolgen, in welchen zunächst die Außennabe und anschließend der Schulterbereich eines Zapfens so eingesetzt werden, dass der Schulterbereich des Zapfens die Außennabe gegen einen Anschlagbereich des Armierungsrings anlegt. Durch die stoffschlüssige Verbindung zwischen dem Armierungsring und dem Schulterbereich des Zapfens wird das Gelenk fertiggestellt, ohne dass hierfür Umformschritte während der Montage erforderlich sind.

Es hat sich als besonders vorteilhaft erwiesen, wenn bei einem Gleichlaufgelenk mit einer Innennabe, einer Außennabe und mit einem formschlüssig mit der Außennabe verbindbaren Armierungsring, der die Außennabe drehfest umgreift, die Außennabe aus einem gehärteten Material, bspw. Blech, besteht, während der Armierungsring aus einem nicht gehärteten Blech besteht, das vorzugsweise im Vergleich zu der Außennabe weicher ist. Dies bringt nicht nur in Bezug auf die Herstellungskosten erhebliche Vorteile mit sich, da lediglich die Außennabe und nicht wie bei dem Stand der Technik vergleichsweise dickwandige Bauteile gehärtet werden müssen, sondern die Härtung des Armierungsrings kann entfallen. Im Betrieb bedeutet dies, dass sich bei Drehmomentstößen die vergleichsweise dünnwandige Außennabe geringfügig elastisch verformen kann, wobei der weichere Armierungsring diese Verformung der Außennabe aufnehmen kann. Risse oder dergleichen Beschädigungen des Armierungsrings sind bei derartigen Drehmomentstößen also nicht zu befürchten. Auf diese Weise entsteht ein Gleichlaufgelenk, das nicht nur besonders kostengünstig herstellbar ist und ein geringes Gewicht aufweist, sondern das auch hinsichtlich seiner Betriebseigenschaften erhebliche Vorteile gegenüber bekannten Gelenken aufweist.

Herkömmliche Gelenke werden über einen Faltenbalg abgedichtet, so dass kein Schmutz in das Gelenk eindringen bzw. Fett aus diesem austreten kann. Dieser Faltenbalg wird beispielsweise an der Außennabe oder einem Armierungsring und einer mit der Innennabe verbindbaren Welle befestigt. Üblicherweise werden in die für Personenkraftwagen eingesetzten Gelenke Fettmengen von etwa 70 bis etwa 120 g eingebracht, um die Komponenten des Gelenkes für dessen Lebensdauer zu schmieren. Dieses Fett verträgt sich jedoch häufig nicht mit dem Material des Balgs. Zudem wirkt sich auch die vergleichsweise große Menge an Fett, die jeweils beschleunigt bzw. abgebremst werden muss, negativ auf die Eigenschaften des Gelenks aus.

Ggf. ist zusätzlich zu einem Faltenbalg eine beispielsweise scheibenartig ausgebildete Fettsperre vorgesehen ist. Erfindungsgemäß ist diese Fettsperre, die aus einem elastisch verformbaren Material besteht, in dem Armierungsring angeordnet und an diesem oder einer mit der Innennabe verbundenen Welle dichtend fixiert. Der freie Rand der Fettsperre, d.h. der radial innere Rand, wenn die Fettsperre an dem Armierungsring fixiert ist, liegt vorzugsweise dichtend an der Welle bzw. im umgekehrten Fall an dem Armierungsring an. Auf diese Weise wird auch bei einer Beugung des Gelenks der Austritt von Fett aus dem unmittelbaren Gelenkbereich verhindert. Es muss folglich nur ein vergleichsweise kleiner Bereich des Gelenks mit Fett befüllt werden, um eine ausreichende Schmierung während der Lebensdauer des Gelenks sicherzustellen. Der durch den Faltenbalg umschlossene, vergleichsweise große Bereich kann dabei jedoch frei von Fett bleiben. Hierdurch wird nicht nur eine signifikante Gewichtsersparung erreicht, sondern das Material des Faltenbalgs wird auch deutlich weniger durch das teilweise aggressive Fett angegriffen. Bei dem erfindungsgemäßen Gelenk reichen beispielsweise 40 bis etwa 50 g Fett für eine Schmierung des Gelenks aus.

Nach einem weiteren Aspekt ist bei einem Gleichlaufgelenk, das eine Innennabe, eine Außennabe und einen Armierungsring aufweist, die Länge des Armierungsrings in axialer Richtung des Gelenks etwa um den Faktor 1,5 bis 2,5 größer als die Länge der Außennabe in axialer Richtung des Gelenks. Insbesondere ist die Länge des Armierungsrings etwa um den Faktor 1,7 bis 2 größer als die Länge der Außennabe. Auf diese Weise entsteht wenigstens ein in axialer Richtung über die Außennabe vorstehender Abschnitt des Armierungsrings. Dies kann entweder ein Anbindungsabschnitt zur Befestigung eines Zapfens und/oder vorzugsweise zylindrischer Dichtungsabschnitt sein, der zur Befestigung einer Fettsperre und/oder eines Faltenbalgs dienen kann. Der Armierungsring erfüllt bei diesem erfindungsgemäßen Gelenk somit mehrere Aufgaben, so dass die Gesamtzahl der Bauteile des Gelenks klein gehalten werden kann.

In Weiterbildung dieser Gedanken ist es vorgesehen, dass bei einem Gelenk mit einem mit der Außennabe verbindbaren Zapfen zum Anschluss des Gelenks dieser Zapfen zumindest bereichsweise eine mit der Innenkontur des Armierungsrings korrespondierende, Drehmoment übertragende Außenkontur aufweist. Das Drehmoment wird folglich nicht ausschließlich über die beispielsweise stoffschlüssige Verbindung zwischen dem Zapfen und dem Armierungsring übertragen, sondern im Wesentlichen durch die formschlüssige Verbindung dieser beiden Bauteile.

Der Armierungsring hat nach einer bevorzugten Ausführungsform wenigstens eine sich etwa senkrecht zur Längsachse des Gelenks radial nach innen erstreckende Schulter, die einen Anschlagbereich für die Positionierung der Außennabe bildet. Bei einem als Gegenbahngelenk ausgebildeten Gleichlaufgelenk sind darüber hinaus bereits durch die sich in unterschiedliche Richtungen aufweitenden bzw. verjüngenden Bahnkonturen in der Außennabe bei einer entsprechend angepassten Gestaltung des Armierungsrings zusätzliche Anschlagbereiche für die Positionierung der Außennabe vorgesehen.

Bei einem mit einer in dem Armierungsring angeordneten Fettsperre ausgestalteten Gleichlaufgelenk weist die Fettsperre vorzugsweise einen äußeren, beispielsweise durch einen Ring oder ein Band verstärkten, Wulstabschnitt auf, der in den Armierungsring eingepresst ist. Dieser Wulstabschnitt ist vorzugsweise etwa hülsenartig ausgebildet, so dass eine große Kontaktfläche zur Abdichtung gegen den Armierungsring besteht. Die Haupterstreckungsrichtung der Fettsperre ist dagegen beim ungebeugten Gelenk etwa senkrecht zu diesem Wulstabschnitt und damit senkrecht zu der Längsachse des Gelenks.

Es wird besonders bevorzugt, wenn das Gelenk ein Festgelenk, insbesondere ein Gegenbahngelenk, ist, das zwischen der Innennabe und der Außennabe an dem Käfig mit daran geführten Kugeln zur Drehmomentübertragung aufweist.

Die Komponenten des Gelenks sind vorzugsweise zur Übertragung eines Dauerdrehmoments von mehr als 400 Nm, insbesondere von mehr als 550 Nm, oder Stoßmomenten von bspw. 4000 bis 6000 Nm ausgelegt. Mit anderen Worten ist das erfindungsgemäße Gelenk auch für große und leistungsstarke Motoren in Personenkraftwagen geeignet. Es wird dabei bevorzugt, wenn das Gelenk auch bei dem Einsatz in schwächer motorisierten Fahrzeugen in seiner Auslegung nicht verändert wird, d.h. wenn das Gelenk eher überdimensioniert ist.

Um die ungefederte Masse bei Fahrzeugen möglichst gering zu halten, ist ein erfindungsgemäßes Gelenk so ausgestaltet, dass insbesondere durch die Verringerung der Wandstärken zumindest des Armierungsrings und/oder der Außennabe das Gewicht des aus Innennabe, Käfig, Kugeln, Außennabe und Armierungsring bestehende Gelenks weniger als 1 kg, insbesondere weniger als etwa 600 g, beträgt. Gleichzeitig soll ein solches Gelenk für die Übertragung eines Dauerdrehmoments von mehr als 500 Nm, beispielsweise etwa 600 Nm, ausgelegt sein. Exemplarisch zeigt die nachfolgende Tabelle die vorteilhafte gewichtsreduzierte Ausgestaltung des erfindungsgemäßen Gelenkes im Vergleich zu einem herkömmlichen UF-Standardgelenk, das ein massives, integral mit dem Zapfen verbundenes und als Außennabe ausgestaltetes Außenteil aufweist und in dieser Art im Automobilbau zum Einsatz kommt.

| | **Erfindungsgemäßes Gelenk** | **UF-Standardgelenk** |
|---|---|---|
| Außenteil | ~ 200 g | ~ 2200 g (incl. Zapfen) |
| Aussennabe | ~ 100 g | |
| Kugelnabe | ~ 170 g | ~ 170 g |
| Kugelkäfig | ~ 40 g | ~ 70 g |
| Kugeln | ~ 48 g | ~ 72 g |
| **Gewicht Gelenk** | **~ 560 g** | **~ 2,5 kg** |
| | | |
| Zapfen | ~ 780 g | |
| Fett | ~50g | ~ 75 g |
| **Summe** | **~ 1,4 kg** | **~ 2,5 kg** |

Wie obige Tabelle verdeutlicht, weist die Erfindung nicht nur hinsichtlich des Gewichtes des eigentliches Gelenkes Vorteile auf, sondern auch unter Berücksichtigung eines generell bei der Erfindung an unterschiedliche Vorgaben anpassbaren Zapfens und des Schmierfettes. Hier lässt sich eine Gewichtsersparnis insbesondere im Radbereich von - 1 kg realisieren, was sich vorteilhaft auf die Fahrzeugsicherheit, die Gewichtsreduzierung sowie den Kraftstoffverbrauch auswirkt. Insbesondere durch den auswechselbaren Anbindungsbau von Zapfen und dem eigentlichen Gelenk lässt sich die vorliegende Erfindung modular für verschiedene Antriebsstränge und Anbindungssysteme an Rad und Achsgetriebe kosteneffizient einsetzen. Gerade auch bei Antriebssträngen, die für hohe Leistungen ausgelegt sind, weist das erfindungsgemäße Gelenk die o.g. Vorteile auf, da den hohen Drehmomenten in der Regel mit einem größeren und noch schwereren Standardgelenk, wie einem UF 107, begegnet werden muss.

Um das Gelenk möglichst vielseitig einsetzen zu können, wird es bevorzugt, wenn dieses ein im Betrieb zulässigen Beugewinkel der Außennabe zu der Innennabe von mehr als 30°, insbesondere etwa 45°, aufweist. Das Gelenk kann somit sowohl in der Vorderachse als auch in der Hinterachse eingesetzt werden, wobei die großen zulässigen Betriebsbeugewinkel in der Hinterachse nicht zwingend erforderlich wären.

Vorteilhafterweise kann das Gelenk derart ausgebildet sein, dass der Armierungsring die Außennabe bereichsweise umgreift und die Außennabe gleichzeitig zapfenseitig von dem Zapfen bereichsweise umgriffen wird. Der Armierungsring kann eine Abstufung zur Bildung einer Anschlagfläche für den Zapfen aufweisen und umgreift in weiterer zapfenseitiger Richtung ebenfalls den Zapfen. Ebenso können die Außennabe, der Zapfen und der Armierungsring durch korrespondierende Drehmoment übertragende Profilierungen die Übertragung von hohem Drehmoment gewährleisten, da das Drehmoment sowohl von der Außennabe über den Armierungsring, als auch direkt von der Außennabe auf den Zapfen übertragen wird.

Die der Erfindung zugrunde liegende Aufgabe wird durch eine Gelenkwelle nach Anspruch 1 gelöst, die zwei Gleichlaufgelenke, wenigstens ein Wellenrohr und ggf. eine Verschiebeeinheit aufweist. Vorzugsweise sind die beiden Gelenke baugleich, insbesondere identisch, und jedem Gelenk ist ein mit der Außennabe und/oder dem Armierungsring verbindbare Zapfen zum Anschluss des Gelenks zugeordnet. Die Gelenke können dabei insbesondere solche der oben genannten Art sein, d.h. Gelenke, die eine Innennabe, eine Außennabe, einen zwischen diesen angeordneten Käfig mit Kugeln und einen formschlüssig mit der Außennabe verbundenen Armierungsring aufweisen. Die Gelenke können dabei sogar dahingehend baugleich sein, dass die Art der Anbindung des Zapfens, beispielsweise mit einem flanschartigen Schulterbereich, der mit einer Anschlagfläche die Position der Außennabe in dem Armierungsring bestimmt, übereinstimmen, während nur die Gestaltung des eigentlichen Wellenzapfens individuell an die jeweilige Anbindung, d.h. an ein Getriebe oder Differential bzw. an ein Rad angepasst sind.

Die Verwendung derartiger baugleicher Gelenke bringt ein erhebliches Kosteneinsparungspotential mit sich. Insbesondere bei vollständiger oder im Wesentlichen vollständiger umformtechnischer Herstellung der einzelnen Komponenten der Gelenke können diese sehr präzise und gleichzeitig kostengünstig hergestellt werden. Dies ist allerdings nur dann wirtschaftlich sinnvoll, wenn diese auch in großen Stückzahlen benötigt werden, was dadurch erreicht werden kann, dass in den Seitenwellen baugleiche Gelenke und nicht verschiedene Gelenke eingesetzt werden.

In Weiterbildung dieses Erfindungsgedankens ist es vorgesehen, dass in einem Antriebsstrang für ein Kraftfahrzeug mit wenigstens einer Längswelle und wenigstens zwei Seitenwellen, die jeweils Gelenke aufweisen, alle diese Gelenke baugleich, insbesondere identisch, sind. Bei einem allradgetriebenen Fahrzeug können damit in der Längswelle bspw. drei baugleiche Gelenke und zusätzlich insgesamt acht weitere Gelenke in den Seitenwellen identisch gestaltet werden. Bei einer teilweise vorgesehen zusätzlichen Zwischenwelle zwischen dem Getriebe und einem Vorderachsdifferential erhöht sich die Anzahl der identischen Gelenke in dem Antriebsstrang in diesem Beispiel sogar auf dreizehn. Alle diese Gelenke sind dann vorzugsweise Festgelenke mit einem maximalen Beugewinkel im Betrieb von etwa 45°.

Eine erfindungsgemäße Gelenkwelle für ein Kraftfahrzeug zeichnet sich dadurch aus, dass das Gesamtgewicht der beiden Gelenke, d.h. der Innennaben, Au-βennaben, der Käfige mit den Kugeln und der Armierungsringe, zusammen kleiner als das des wenigstens einen Wellenrohrs mit der ggf. vorgesehenen Verschiebeeinheit ist. Insbesondere ist das Gesamtgewicht der beiden Gelenke etwa um den Faktor 5 kleiner als das Gesamtgewicht der übrigen Wellenkomponenten.

Die gesamte Gelenkwelle hat dabei vorzugsweise ein Gewicht von weniger als etwa 6,5 kg beim Einsatz an der Hinterachse bzw. weniger als etwa 5,5 kg beim Einsatz an der Vorderachse. Dies liegt an den vergleichsweise kürzeren Wellenrohren beim Einsatz an der Vorderachse. Hierbei sind die Komponenten der Welle und insbesondere der Gelenke auf die Übertragung eines Dauerdrehmoments von mehr als 500 Nm ausgelegt und weisen im Betrieb zulässigen Beugewinkel von vorzugsweise etwa 45° auf.

Die Erfindung wird nachfolgend anhand von Ausführungsbeispielen und unter Bezugnahme auf die Zeichnung näher erläutert. Es zeigen schematisch:
Fig. 1 in teilweise geschnittener Seitenansicht ein Gelenk im gestreckten Zustand,
Fig. 2 das Gelenk nach Fig. 1 in gebeugtem Zustand und
Fig. 3 in teilweise geschnittener Seitenansicht eine erfindungsgemäße Seitenwelle mit zwei Gelenken nach den Fig. 1 und 2 und
Fig. 4 in teilweise geschnittener Seitenansicht eine weitere Variante des Gelenkes.

Das in den Figuren dargestellte Gelenk 1 weist zur Anbindung einer Welle 2 eine Innennabe 3 auf. Die Innennabe 3 ist von einer Außennabe 4 umgriffen, wobei zwischen der Innennabe 3 und der Außennabe 4 ein Käfig 5 geführt ist, in dessen Fenstern Kugeln 6 zur Übertragung eines Drehmoments zwischen der Innennabe 3 und der Außennabe 4 aufgenommen sind.

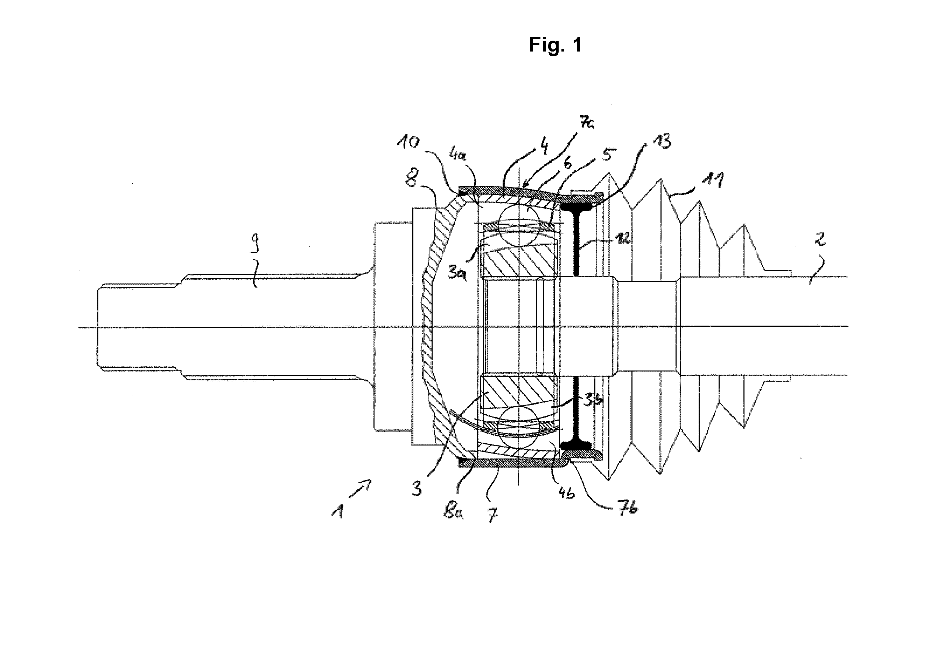

Das Gelenk 1 ist als ein Gegenbahngelenk, d.h. als ein Festgelenk ausgebildet, bei welchem die Innennabe 3 durch die Kugeln in axialer Richtung unverschiebbar zu der Außennabe 4 gehalten ist. Hierzu sind die Innennabe 3 und die Au-βennabe 4 mit Laufbahnen 3a, 3b, 4a, 4b zur Aufnahme der Kugeln 6 ausgebildet. Die einander zugeordneten Laufbahnpaare 3a, 4a; 3b, 4b der Innennabe 3 und der Außennabe 4 öffnen sich in die gleiche Richtung, d.h. der Bahngrund des in Fig. 1 oberen Laufbahnpaares 3a, 4a nähert sich in der Figur von links nach rechts gesehen aneinander an. Der Käfig 5 ist in der Außennabe 4 geführt, wobei angrenzend an die Außenlaufbahnen 4a, 4b in der Außennabe 4 Käfigführungsflächen vorgesehen sind.

Die Außennabe 4 ist von einem Armierungsring 7 umgriffen, dessen Innenkontur an die Außenkontur der Außennabe 4 angepasst ist. Die Montage der Außennabe 4 in dem Armierungsring 7 erfolgt, indem die Außennabe 4 in Fig. 1 von links nach rechts in den Armierungsring 7 eingeschoben wird. Entsprechend der Konturierung der Außenlaufbahnen 4a der Außennabe 4 weist der Armierungsring 7 eine profilierte Innenkontur auf, die nicht nur eine Drehmomentübertragung zwischen der Außennabe 4 und dem Armierungsring 7 ermöglicht, sondern auch die axiale Position der Außennabe in dem Armierungsring 7 definiert. Der Armierungsring 7 bildet somit mit seiner inneren Profilierung einen ersten Anschlagbereich 7a für die Positionierung der Außennabe 4.

Für die in die andere Richtung öffnenden Laufbahnpaare 3b, 4b, wie eines beispielsweise in Fig. 1 unten dargestellt ist, weist der Armierungsring 7 eine schalenförmige Ausnehmung mit konstantem Querschnitt auf. Die Außennabe 4 liegt in diesem Bereich also nur mit der in Fig. 1 rechten Stirnseite an einer entsprechenden Schulter 7b des Armierungsringes 7 an, wodurch ebenfalls eine axiale Positionierung der Außennabe 4 in dem Armierungsring 7 erreicht wird. Auch die Schulter 7b bildet somit einen Anschlagbereich.

Die Position der Außennabe 4 in dem Armierungsring 7 wird weiter dadurch bestimmt, dass der flanschartig aufgeweitete Schulterbereich 8 eines Zapfens 9 in den Armierungsring 7 eingesetzt wird und mit einer stirnseitigen Anschlagfläche 8a an der Außennabe 4 anliegt. Durch die in der Ausführungsform nach Fig. 1 dargestellte Schweißverbindung 10 zwischen dem Armierungsring 7 und dem Schulterbereich des Zapfens 9 wird die Außennabe 4 in dem Armierungsring 7 fixiert. Der Schulterbereich des Zapfens 9 weist dabei eine Profilierung entsprechend der des Armierungsrings 7 auf, so dass ein Drehmoment von dem Armierungsring 7 über die Profilierung in den Schulterbereich 8 des Zapfens 9 übertragen wird.

In der dargestellten Ausführungsform sind die Außennabe 4 und der Armierungsring 7 als vergleichsweise dünnwandige Bauteile ausgebildet. Hierbei ist nach einer bevorzugten Ausführungsform nur die Außennabe 4 gehärtet, um insbesondere den punktförmigen Belastungen durch die Kugeln 6 während der Drehmomentübertragung standhalten zu können, wogegen der Armierungsring 7 nicht gehärtet ist und damit aus einem im Vergleich zu der Außennabe 4 weicheren Material besteht. Etwaige geringfügige Verformungen der Außennabe 4 bei Drehmomentstößen können auf diese Weise von dem Armierungsring 7 aufgefangen werden.

Die Länge des Armierungsrings 7 ist in axialer Richtung deutlich größer als die der Außennabe 4. Auf diese Weise kann zum einen der Schulterbereich 8 des Zapfens 9 auf der in Fig. 1 linken Seite in einem über die Außennabe 4 axial vorstehenden Bereich des Armierungsrings 7 aufgenommen werden. Auf der anderen, in Fig. 1 rechten Seite ist ein abschnittsweise zylindrischer Vorsprung des Armierungsrings 7 gegenüber der Außennabe 4 ausgebildet. Dieser dient zum einen der Befestigung eines Faltenbalgs 11 auf dem Armierungsring 7. Der Faltenbalg 11 ist zudem auf der Welle 2 befestigt, um so das Gelenk 1 vor dem Eindringen von Schmutz zu schützen.

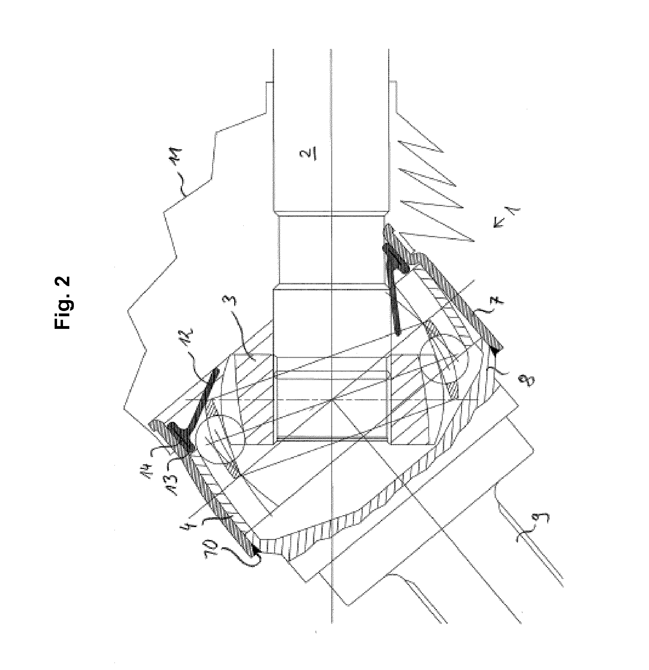

Auf der Innenseite des zylindrischen Vorsprungs des Armierungsrings 7 ist eine scheibenförmige Fettsperre 12 aus einem elastisch verformbaren Material eingebracht. Ein hülsenartiger Wulstbereich 13 der Fettsperre 12, der mit einem Band oder einem Ring 14 (vgl. Fig. 2) verstärkt sein kann, ist dabei in dem Armierungsring 7 festgepresst. Der radial innere Randbereich der Fettsperre 12 liegt dichtend an der Welle 2 an. Wie aus der Ansicht der Fig. 2 hervorgeht, verformt sich der bei gestrecktem Gelenk etwa senkrecht zur Gelenkachse stehende scheibenartige Bereich der Fettsperre 12 bei einer Beugung des Gelenks, wobei die Fettsperre weiterhin an der Welle 2 bzw. der Innennabe 3 oder dem Käfig 5 anliegt, um ein Austreten von Fett aus dem Gelenk zu unterbinden. Durch das Vorsehen der Fettsperre 12 muss nur ein vergleichsweise kleiner Bereich des Gelenks, d.h. der in Fig. 1 links der Fettsperre 12 gelegene Bereich mit Fett gefüllt werden, um eine ausreichende Schmierung der Komponenten des Gelenks 1 über dessen Lebensdauer sicherzustellen. Bei dem Ausführungsbeispiel nach Fig. 1 reichen beispielsweise etwa 40 bis 50 g Fett aus. Der auch von dem Faltenbalg 11 abgedichtete Bereich in Fig. 1 rechts der Fettsperre 12 muss dagegen nicht mit Fett gefüllt werden.

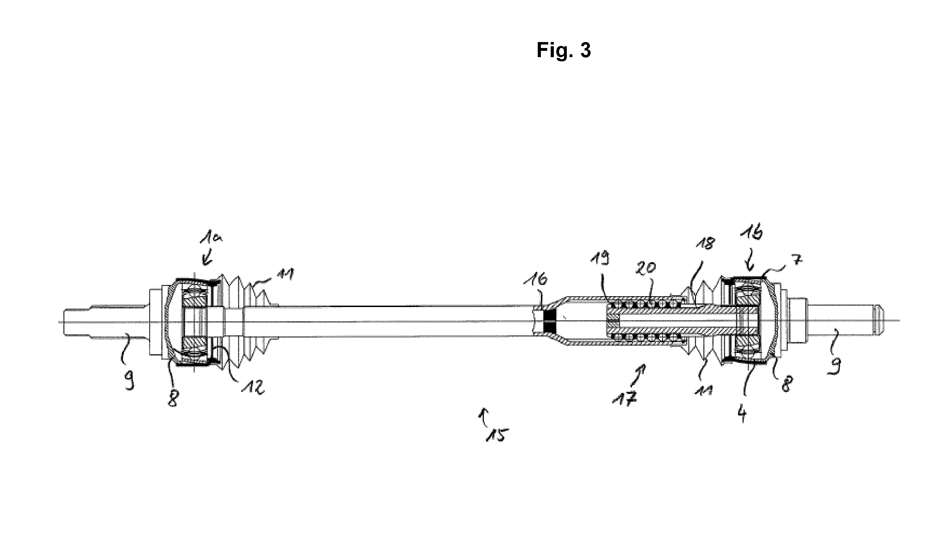

Die in Fig. 3 gezeigte Seitenwelle 15 besteht aus zwei Gelenken 1a und 1 b der zuvor beschriebenen Art, sowie einer Hohlwelle 16 und einer Verschiebeeinheit 17, die eine axiale Längenänderung der Seitenwelle 15 zulässt. Die Verschiebeeinheit 17 ist durch einen aufgeweiteten Hülsenbereich der Hohlwelle 16 sowie einen in diese Hülse eintauchenden Zapfen 18 gebildet, die jeweils in axialer Richtung verlaufende Laufbahnen aufweisen, in denen ein Käfig 19 mit mehreren hintereinander liegenden Kugeln 20 geführt ist. Die Verschiebeeinheit 17 erlaubt somit ausschließlich einen axialen Längenausgleich der Seitenwelle 15.

Wie aus der Darstellung der Fig. 3 ersichtlich ist, sind die beiden Gelenke 1a und 1b insoweit identisch aufgebaut, als die Innennaben 3, die Außennaben 4, die Käfige 5, die Kugeln 6 sowie die Armierungsringe 7 baugleich (identisch) sind. Auch die Fettsperren 12 sowie die Anbindung der beiden Faltenbälge 11 stimmt überein. Auch die Anbindung der Zapfen 9 mit den Schulterbereichen 8 ist bei beiden Gelenken 1a und 1b gleich. Diese unterscheiden sich allenfalls in der Gestaltung der Zapfen 9 selbst, die an die jeweiligen Einbaubedingungen angepasst werden können.

Die in der Ausführungsform der Fig. 3 dargestellte Seitenwelle 15 ist für den Einsatz sowohl in der Vorderachse als auch in der Hinterachse eines allradgetriebenen Fahrzeugs mit einem maximalen Dauerdrehmoment von 580 Nm bei einer Motorleistung von etwa 300 PS ausgelegt. Der maximale Betriebsbeugewinkel jedes der Gelenke 1a und 1b beträgt 45°. Das Gewicht der Seitenwelle 15 liegt dabei insgesamt bei unter 5,5 kg für Vorderachse und unter 7 kg für Hinterachse.

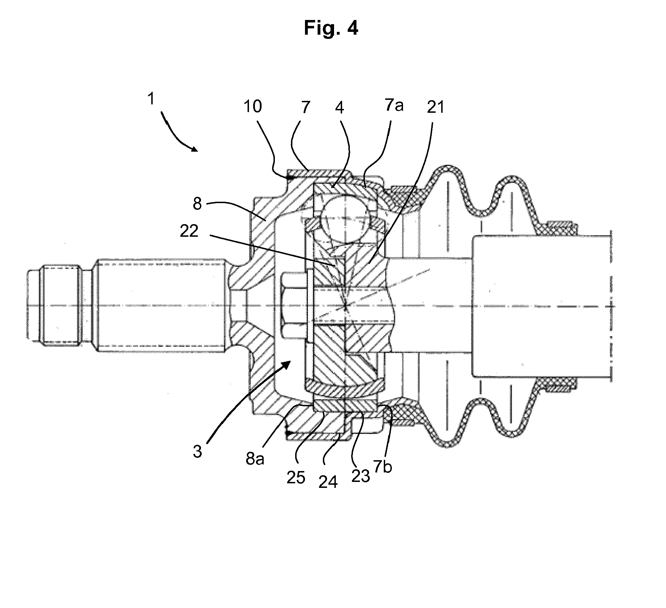

Die Figur 4 stellt eine weitere mögliche Variante des erfindungsgemäßen Gelenkes dar. Analog zur ersten Ausführungsform ist das Gelenk 1 als ein Gegenbahngelenk ausgeführt, jedoch umfasst bei dieser Ausführungsform die Innennabe 3 zwei miteinander verbundene Elemente, die auf der Innennabenachse hintereinander liegen und von denen ein erstes Element 21 die ersten Innenlaufrillen und ein zweites Element 22 die zweiten Innenlaufrillen des Gelenkes 1 aufweisen.

Der Armierungsring 7, der gleichzeitig zur Befestigung des Faltenbalges 11 ausgebildet ist, umgreift die Außennabe 4 unmittelbar in einem ersten Bereich 23 wobei Armierungsring 7 und Innennabe 4 mit korrespondierenden Profilierungen analog zur ersten Ausführungsform ausgebildet sind. Ein erster Anschlagbereich 7a gewährleistet die Positionierung der Außennabe 4, während der Armierungsring 7 für die in die andere Richtung öffnenden Laufbahnpaare 3b, 4b eine schalenförmige Ausnehmung mit konstantem Querschnitt bildet und die Außennabe in diesem Bereich an der Schulter 7b des Armierungsringes 7 anliegt. Die Schulter 7b bildet den Anschlagbereich, durch den ebenfalls eine axiale Positionierung der Außennabe 4 in dem Armierungsring 7 gewährleistet wird. Gleichzeitig wird die Position der Außennabe 4 durch den Zapfen 9 sichergestellt, der einen Absatz zur Bildung der stirnseitigen Anschlagfläche 8a besitzt, an der die Außennabe 4 anliegt. Die Schweißverbindung 10 sichert die axiale Fixierung der Verbindung zwischen dem Armierungsring 7, der Außennabe 4 und dem Zapfen 9. Der Schulterbereich 8 des Zapfens 9 ist im Vergleich zu der in Fig. 1 dargestellten Ausführungsform in axialer Richtung länger ausgebildet und umgreift auch die Außennabe 4 in einem zweiten Bereich 24 in Art einer Außenzentrierung, wobei der Schulterbereich 8 des Zapfens 9 auch von dem Armierungsring 7 in dem dritten Bereich 25 umgriffen wird. Zapfen 9 und Armierungsring 7 weisen dabei zur Drehmomentübertragung dienende korrespondierende Profilierungen auf der Außen- und der Innenseite auf, wodurch Drehmoment sowohl von der Außennabe 4 direkt als auch über den Armierungsring 7 auf dem Zapfen 9 übertragen wird.

### Bezugszeichenliste:

- 1, 1a, 1b: Gelenk
- 2: Wellenzapfen
- 3: Innennabe
- 3a, 3b: Innenlaufbahn
- 4: Außennabe
- 4a, 4b: Außenlaufbahn
- 5: Käfig
- 6: Kugel
- 7: Armierungsring
- 7a, 7b: Anschlagbereich
- 8: Schulterbereich
- 8a: Anschlagfläche
- 9: Zapfen
- 10: Schweißverbindung
- 11: Faltenbalg
- 12: Fettsperre
- 13: Wulstabschnitt
- 14: Band
- 15: Seitenwelle
- 16: Hohlwelle
- 17: Verschiebeeinheit
- 18: Zapfen
- 19: Käfig
- 20: Kugel
- 21: erstes Element
- 22: zweites Element
- 23: erster Bereich
- 24: zweiter Bereich
- 25: dritter Bereich

## Patentansprüche

1. Gelenkwelle für ein Kraftfahrzeug, insbesondere Seitenwelle, mit zwei Gleichlaufgelenken, die jeweils eine Innennabe (3), eine Außennabe (4), einen zwischen diesen angeordneten Käfig (5) mit Kugeln (6) und einen formschlüssig mit der Außennabe verbindbaren Armierungsring (7) aufweisen, wenigstens einem Wellenrohr (16) und ggf. einer Verschiebeeinheit (17, 18), **dadurch gekennzeichnet, dass** das Gesamtgewicht der beiden Gelenke (1a, 1b) zusammen kleiner, insbesondere etwa um den Faktor 5 kleiner, als das des wenigstens einen Wellenrohrs (16) mit der ggf. vorgesehenen Verschiebeeinheit (17, 18) ist.

2. Gelenkwelle für die Vorderachse eines Kraftfahrzeugs nach Anspruch 1, **dadurch gekennzeichnet**, das Gewicht der Gelenkwelle etwa 4 kg bis etwa 5,5 kg beträgt.

3. Gelenkwelle für die Hinterachse eines Kraftfahrzeugs nach Anspruch 1, **dadurch gekennzeichnet**, das Gewicht der Gelenkwelle etwa 5 kg bis etwa 7 kg beträgt.

4. Gelenkwelle nach einem der Ansprüche 1 bis 3, **dadurch gekennzeichnet, dass** die die Gelenke baugleich, insbesondere identisch, sind, wobei jedem Gelenk (1a, 1b) ein mit der Außennabe (4) und/oder dem Armierungsring (7) verbindbarer Zapfen (9) zum Anschluss des Gelenks zugeordnet ist.

5. Gelenkwelle nach Anspruch 4 als Bestandteil eines Antriebsstrangs für ein Kraftfahrzeug mit wenigstens einer Längswelle und wenigstens zwei Seitenwellen (15), die jeweils Gelenke (1, 1a, 1b) aufweisen, **dadurch gekennzeichnet, dass** alle Gelenke (1, 1a, 1 b) des Antriebsstrangs baugleich, insbesondere identisch, sind.
